# EUROPÄISCHE PATENTSCHRIFT

(11) **EP 4 616 114 B1**
(45) Veröffentlichungstag und Bekanntmachung des Hinweises auf die Patenterteilung: **16.09.2026**
(21) Anmeldenummer: 23790619.3
(22) Anmeldetag: 16.10.2023
(51) Int. Cl.: F17C 13/04, F16K 31/06

(54) **ABSPERRVENTIL FÜR EINEN DRUCKGASBEHÄLTER, DRUCKGASBEHÄLTER MIT ABSPERRVENTIL**
SHUT-OFF VALVE FOR A COMPRESSED-GAS CONTAINER, COMPRESSED-GAS CONTAINER HAVING A SHUT-OFF VALVE
VANNE D'ARRÊT POUR UN RÉCIPIENT DE GAZ COMPRIMÉ, RÉCIPIENT DE GAZ COMPRIMÉ AYANT UNE VANNE D'ARRÊT

(30) Priorität: 08.11.2022 DE 102022211751
(43) Veröffentlichungstag der Anmeldung: 17.09.2025
(73) Patentinhaber: Robert Bosch GmbH, 70442 Stuttgart (DE)
(72) Erfinder: SCHAICH, Udo, 70378 Stuttgart (DE); RAU, Andreas, 70469 Stuttgart (DE); BEIER, Marco, 07407 Rudolstadt (DE)
(86) Internationale Anmeldenummer: PCT/EP2023/078672
(87) Internationale Veröffentlichungsnummer: WO 2024/099699

(56) Entgegenhaltungen:
- WO-A1-2022/100974
- DE-A1- 102010 005 411
- DE-A1- 102018 221 602

## Beschreibung

Die Erfindung betrifft ein Absperrventil für einen Druckgasbehälter mit den Merkmalen des Oberbegriffs des Anspruchs 1. Darüber hinaus betrifft die Erfindung einen Druckgasbehälter mit einem erfindungsgemäßen Absperrventil.

Bei dem Druckgasbehälter kann es sich insbesondere um einen Behälter zum Speichern eines Brenngases, wie beispielsweise Wasserstoff oder Erdgas, handeln. Derartige Brenngase werden unter anderem von Fahrzeugen benötigt, die Brennstoffzellen oder einen Gasmotor aufweisen. Bevorzugter Anwendungsbereich der Erfindung sind daher mobile Anwendungen. Stationäre Anwendungen sind jedoch nicht ausgeschlossen.

### Stand der Technik

Druckgasbehälter zum Speichern von Brenngasen, wie beispielsweise Wasserstoff oder Erdgas, unterliegen gesetzlichen Sicherheitsvorschriften. Diese sehen beispielsweise ein selbsttätig schließendes Absperrventil vor.

Ein solches Absperrventil ist beispielsweise aus der DE 10 2018 221 602 A1 bekannt. Es ist elektromagnetisch mit Hilfe einer Magnetspule ansteuerbar, deren Magnetkraft auf ein entlang einer Längsachse hin und her bewegliches Ansteuerventilelement wirkt. Bei unbestromter Magnetspule drückt eine Feder das Ansteuerventilelement gegen einen gehäuseseitig ausgebildeten Ventilsitz. Ein weiteres Absperrventil ist aus der WO 2022/100974 A1 bekannt.

Darüber hinaus sind indirekt und/oder mehrstufig öffnende Absperrventile bekannt, die ein Hauptventil und ein Steuerventil umfassen. Durch das Steuerventil wird beim Öffnen zunächst ein kleiner Öffnungsquerschnitt freigegeben, wodurch sich die erforderliche Kraft zum Öffnen reduziert. Mit Öffnen des Steuerventils ändern sich die Druckverhältnisse am Hauptventil, so dass in der Folge auch dieses öffnet. Um das Öffnen des Hauptventils zu unterstützen, kann zwischen dem Steuerventil und dem Hauptventil ein mechanischer Mitnehmer angeordnet sein.

Die vorliegende Erfindung ist mit der Aufgabe befasst, ein elektromagnetisch ansteuerbares Absperrventil für einen Druckgasbehälter anzugeben, das mit möglichst geringer Magnetkraft öffenbar ist, so dass die Magnetspule und damit das Absperrventil kleiner dimensioniert werden können.

Zur Lösung der Aufgabe wird das Absperrventil mit den Merkmalen des Anspruchs 1 vorgeschlagen. Vorteilhafte Weiterbildungen der Erfindung sind den Unteransprüchen zu entnehmen. Darüber hinaus wird ein Druckgasbehälter mit einem erfindungsgemäßen Absperrventil angegeben.

### Offenbarung der Erfindung

Das für einen Druckgasbehälter vorgeschlagene Absperrventil umfasst:
- ein Hauptventil mit einem Hauptventilsitz und einem hubbeweglichen Hauptventilglied,
- ein Steuerventil zum Steuern der Hubbewegung des Hauptventilglieds, wobei das Steuerventil einen hubbeweglichen Ventilstößel aufweist, der mit einem hubbeweglichen Magnetanker koppelbar und in Richtung eines Steuerventilsitzes, der im Hauptventilglied ausgebildet ist, von der Federkraft einer Schließfeder beaufschlagt ist, sowie
- eine Magnetspule zum Einwirken auf den Magnetanker.

Erfindungsgemäß ist bei unbestromter Magnetspule der Magnetanker vom Ventilstößel entkoppelt und über die Federkraft einer Druckfeder gegen einen gehäuseseitigen Anschlag vorgespannt. Die Druckfeder ist dabei einerseits am Magnetanker, andererseits am Hauptventilglied abgestützt.

Über die Druckfeder und den gehäuseseitigen Anschlag ist eine Endlage des Magnetankers vorgegeben, die beim Öffnen des Absperrventils die Ausgangsposition des Magnetankers darstellt. In dieser Ausgangsposition ist der Magnetanker nicht mit dem Ventilstößel gekoppelt, so dass er sich relativ zum Ventilstößel bewegen bzw. einen Freihub ausführen kann. Der Freihub endet mit dem Anschlagen des Magnetankers am Ventilstößel. Der Ventilstößel ist somit lediglich zeitweise mit dem Magnetanker gekoppelt. Das Koppeln erfolgt durch Anschlagen.

Zum Öffnen des Absperrventils wird die Magnetspule bestromt, so dass sich ein Magnetfeld aufbaut, dessen Magnetkraft auf den Magnetanker wirkt. Der Magnetanker löst sich vom gehäuseseitigen Anschlag und setzt sich in Bewegung, wobei er zunächst einen definierten Freihub ausführt. Beim Anschlagen am Ventilstößel überträgt der Magnetanker einen in Öffnungsrichtung wirkenden Impuls, der den Ventilstößel aus dem Steuerventilsitz reißt, so dass das Steuerventil öffnet. Der Impuls bewirkt dabei eine so große temporäre Öffnungskraft, dass die Magnetspule kleiner dimensioniert werden kann.

Mit dem Öffnen des Steuerventils ändern sich die Druckverhältnisse am Hauptventilglied des Hauptventils, bis die in Öffnungsrichtung wirkenden Kräfte überwiegen und auch das Hauptventil öffnet. Das Öffnen wird dabei unterstützt durch die Federkraft der zwischen dem Hauptventilglied und dem Magnetanker angeordneten Druckfeder. Denn über die Öffnungsbewegung des Magnetankers relativ zum Hauptventilglied des noch geschlossenen Hauptventils wird die Druckfeder gespannt, so dass mit zunehmendem Hub des Magnetankers eine ansteigende öffnende Federkraft auf das Hauptventilglied wirkt. Die Druckfeder erleichtert somit das Öffnen des Hauptventils.

Wird die Bestromung der Magnetspule beendet, stellt die Schließfeder den Ventilstößel und - indirekt über den Ventilstößel - das Hauptventilglied in den jeweiligen Sitz zurück. Dabei führt der Ventilstößel den Magnetanker mit. Die vollständige Rückstellung des Magnetankers in seine Ausgangsposition wird aufgrund des Freihub jedoch nicht durch die Mitnahme über den Ventilstößel erreicht, sondern durch die Druckfeder, die den Magnetanker gegen den gehäuseseitigen Anschlag drückt. Über die Druckfeder wird demnach der Magnetanker sicher in seine Ausgangsposition zurückgestellt. Die Ausgangsposition des Magnetankers ist demnach immer gleich, so dass ein stabiles und reproduzierbares Ventilöffnen gewährleistet ist.

Bei der Rückstellung mit Hilfe der Druckfeder löst sich der Magnetanker vom Ventilstößel, so dass der Magnetanker und der Ventilstößel wieder entkoppelt sind. Dies hat den Vorteil, dass die Sitzbelastung in den Sitzen von Haupt- und Steuerventil reduziert ist. Denn der Schließimpuls des verhältnismäßig schweren Magnetankers wird über den gehäuseseitigen Anschlag und nicht über die Sitze abgebaut.

Gemäß einer bevorzugten Ausführungsform der Erfindung weist der Magnetanker einen vorzugsweise hohlzylinderförmigen Abschnitt auf, der das Hauptventilglied unter Ausbildung eines Ringraums abschnittsweise umgibt, wobei im Ringraum die Druckfeder aufgenommen ist. Die Druckfeder ist somit beim Spannen über den Magnetanker und/oder das Hauptventilglied geführt. Dadurch wird ein Ausknicken der Feder verhindert. Zudem wird auf diese Weise eine kompakte Anordnung erreicht, die wenig Bauraum erfordert.

Der die Druckfeder aufnehmende Ringraum kann - je nach Ausgestaltung des Magnetankers und/oder des Hauptventilglieds - in axialer Richtung eine gleichbleibende oder variierende Breite aufweisen. In Umfangsrichtung ist die Breite vorzugsweise umlaufend gleich, so dass der Magnetanker und das Hauptventilglied konzentrisch zueinander angeordnet sind.

Des Weiteren wird vorgeschlagen, dass die Druckfeder einerseits an einem sich nach radial innen erstreckenden Ringbund des vorzugsweise hohlzylinderförmigen Abschnitts des Magnetankers, andererseits an einem sich nach radial außen erstreckenden Ringbund des Hauptventilglieds abgestützt ist. Jeder Ringbund bildet ein Federwiderlager aus, über das die Federkraft der Druckfeder gleichmäßig auf den Magnetanker bzw. auf das Hauptventilglied übertragen wird.

Der Ringbund des vorzugsweise hohlzylinderförmigen Abschnitts des Magnetankers und/oder der Ringbund des Hauptventils kann bzw. können einen in Umfangsrichtung geschlossenen oder mehrfach unterbrochen, insbesondere segmentartigen, Ring ausbilden. Ferner kann zumindest ein Ringbund durch ein zusätzliches Bauelement ausgebildet werden, das kraft-, form- und/oder stoffschlüssig mit dem Magnetanker bzw. dem Hauptventilglied verbunden ist.

Ferner bevorzugt ist der Ventilstößel zumindest abschnittsweise im Magnetanker aufgenommen und weist einen im Magnetanker aufgenommenen, sich nach radial außen erstreckenden Ringbund zur Kopplung mit dem Magnetanker auf. Über den Magnetanker kann somit eine Führung des Ventilstößels erzielt werden. Zur Aufnahme des Ventilstößels ist im Magnetanker eine Bohrung ausgebildet, die vorzugsweise als Stufenbohrung ausgeführt ist, so dass ein mit dem Ringbund zusammenwirkender Absatz ausgebildet wird.

Aufgrund des Freihubs, den der Magnetanker bei einer Hubbewegung durchläuft, ist der Hub des Magnetankers größer als der Hub des Ventilstößels. Bevorzugt wird der Hub des Magnetankers einerseits durch den gehäuseseitigen Anschlag, andererseits durch einen Hubanschlag begrenzt, so dass sich der Magnetanker zwischen zwei Endlagen hin und her bewegt. Bei einer Begrenzung des Hubs besteht die Gefahr, dass es zu einem Prellen des Magnetankers kommt. Die Prellneigung des Magnetankers ist allgemein darauf zurückzuführen, dass mit zunehmendem Hub und kleiner werdendem Arbeitsluftspalt im Magnetkreis die in Öffnungsrichtung wirkende Magnetkraft ansteigt, während die in Schließrichtung wirkende pneumatische Kraft abnimmt. Mit zunehmendem Kraftüberschuss in Öffnungsrichtung wird der Magnetanker beschleunigt, was am Hubanschlag zu einem wiederholten Anschlagen und zu einer als störend empfundenen Geräuschentwicklung führt. Bei dem vorgeschlagenen Absperrventil ist die Prellneigung des Magnetankers jedoch deutlich verringert, da die Hubbewegung des Magnetankers durch das Anschlagen am Ventilstößel und die Impulsübergabe abgebremst wird. Ein weiteres Abbremsen des Magnetankers wird durch die sich spannende Druckfeder erreicht, so dass die Gefahr von Prellern weiter verringert wird.

Die Druckfeder kann eine lineare oder progressive Federkennlinie aufweisen. Beispielsweise kann die Druckfeder als einfache Schraubendruckfeder mit linearer Federkennlinie ausgeführt sein, so dass die Federkraft mit dem Spannen der Druckfeder linear steigt. Als besonders vorteilhaft wird jedoch eine Druckfeder mit progressiver Federkennlinie angesehen, da in diesem Falle die Ventilkraftkennlinie optimal an die Magnetkraftkennlinie angepasst werden kann. Dies wiederum ermöglicht eine weitere Verkleinerung der Magnetspule und damit Miniaturisierung des Absperrventils. Zugleich wird auch die Prellgefahr weiter minimiert.

In Weiterbildung der Erfindung wird daher vorgeschlagen, dass die Druckfeder eine Schraubendruckfeder ist, deren Drahtwindungen
- variierende Drahtdicken
- variierende Windungsdurchmesser und/oder
- variierende Steigungshöhen
aufweisen, so dass die Druckfeder eine progressive Federkennlinie aufweist.

Darüber hinaus wird ein Druckgasbehälter mit einem erfindungsgemäßen Absperrventil vorgeschlagen. Der Druckgasbehälter kann beispielsweise zum Speichern von Brenngas, insbesondere Wasserstoff oder Erdgas, eingesetzt werden, denn mit Hilfe des erfindungsgemäßen Absperrventils können die an einen derartigen Speicher gestellten gesetzlichen Sicherheitsanforderungen erfüllt werden. Zudem weist das Absperrventil eine sehr klein dimensionierte Magnetspule auf, so dass der Bauraumbedarf gering ist. Das Absperrventil kann somit in einfacher Weise in einen engen Flaschenhals eines flaschenförmigen Druckgasbehälters integriert werden.

Flaschenförmige Druckgasbehälter werden beispielsweise in Brennstoffzellenfahrzeugen zum Speichern von Wasserstoff eingesetzt. Zum Schutz der Brennstoffzellen ist üblicherweise ein Druckminderer zwischen dem Druckgasbehälter und den Brennstoffzellen vorgesehen, der den im Druckgasbehälter vorhandenen Hochdruck auf ein Mitteldruckniveau absenkt. Bei Einsatz eines Druckgasbehälters mit einem erfindungsgemäßen Absperrventil ist dieser Druckminderer vor unzulässig hohen Druckstößen geschützt, da über die Federsteifigkeit der Druckfeder und den Hub des Magnetankers der maximale Druckstoß beim Öffnen des Hauptventils sehr genau eingestellt werden kann. Entsprechend sinkt die Belastung des Druckminderers sowie die des nachgeschalteten Mitteldrucksystems einschließlich der Brennstoffzellen.

Bevorzugte Ausführungsformen der Erfindung werden nachfolgend anhand der beigefügten Zeichnungen näher erläutert. Diese zeigen:
Fig. 1 einen schematischen Längsschnitt durch ein erfindungsgemäßes Absperrventil in Schließstellung,
Fig. 2 einen schematischen Längsschnitt durch das Absperrventil der Figur 1 bei bestromter Magnetspule und am Ventilstößel anliegendem Magnetanker,
Fig. 3 einen schematischen Längsschnitt durch das Absperrventil der Figur 1 bei bestromter Magnetspule und am Hubanschlag anliegendem Magnetanker (Steuerventil geöffnet),
Fig. 4 einen schematischen Längsschnitt durch das Absperrventil der Figur 1 bei bestromter Magnetspule und geöffnetem Hauptventil,
Fig. 5 einen schematischen Längsschnitt durch das Absperrventil der Figur 1 bei unbestromter Magnetspule und geschlossenem Haupt- und Steuerventil, und
Fig. 6 einen schematischen Längsschnitt durch ein weiteres erfindungsgemäßes Absperrventil.

### Ausführliche Beschreibung der Zeichnungen

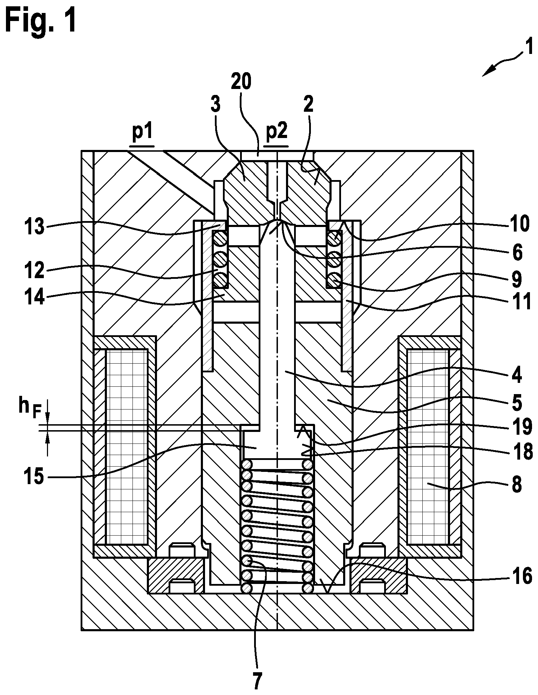

Das in der Figuren 1 bis 5 dargestellte erfindungsgemäße Absperrventil 1 dient der Entnahme von Brenngas, beispielsweise Wasserstoff, aus einem Druckgasbehälter (nicht dargestellt).

Das dargestellte Absperrventil 1 umfasst ein Hauptventil mit einem Hauptventilsitz 2 und einem hubbeweglichen Hauptventilglied 3 sowie ein Steuerventil mit einem im Hauptventilglied 3 ausgebildeten Steuerventilsitz 6 und einem hubbeweglichen Ventilstößel 4. Das Steuerventil wird elektromagnetisch betätigt. Hierzu ist eine Magnetspule 8 vorgesehen, die auf einen mit dem Ventilstößel 4 koppelbaren Magnetanker 5 einwirkt. Die Magnetspule 8 wird zum Öffnen des Steuerventils bestromt. Mit Beendigung der Bestromung der Magnetspule 8 stellt eine m Ventilstößel 4 abgestützte Schließfeder 7 den Ventilstößel 4 in den Steuerventilsitz 6 zurück. Die Federkraft der Schließfeder 7 ist derart dimensioniert, dass mit der Rückstellung des Ventilstößels 4 zugleich der Magnetanker 5 und das Hauptventilglied 3 rückgestellt werden. Das dargestellte Absperrventil 1 ist demnach als stromlos geschlossenes Ventil ausgeführt.

Zur Kopplung mit dem Magnetanker 5 weist der Ventilstößel 4 einen Ringbund 15 auf, der in einer Bohrung des Magnetankers 5 aufgenommen ist, die als Stufenbohrung 18 ausgeführt ist. Abhängig vom Hub des Magnetankers 5 gelangt somit der Ringbund 15 des Ventilstößels 4 zur Anlage an einer Stufe 19 des Magnetankers 5. In Schließstellung des Absperrventils 1 sind die Endlagen des Hauptventilglieds 3 und des Ventilstößels 4 durch die jeweiligen Sitze 2, 6 vorgegeben. Die Endlage des Magnetanker 5 wird dagegen durch einen gehäuseseitigen Anschlag 10 bestimmt. Gegen diesen Anschlag 10 wird der Magnetanker durch die Federkraft einer Druckfeder 9 gedrückt, die in einem Ringraum 12 zwischen dem Hauptventilglied 3 und einem hohlzylinderförmigen Abschnitt 11 des Magnetankers 5 aufgenommen sowie einerseits an einem Ringbund 13 des hohlzylinderförmigen Abschnitts 11, andererseits an einem Ringbund 14 des Hauptventilglieds 3 abgestützt ist. Da die Federkraft der Druckfeder 9 kleiner als die Federkraft der Schließfeder 7 ist, hält die Schließfeder 7 das Absperrventil 1 bei unbestromter Magnetspule 8 geschlossen. In dieser Schließstellung sind der Magnetanker 5 und der Ventilstößel 4 entkoppelt. Das heißt, dass zwischen der Stufe 19 und dem Ringbund 15 ein axialer Spalt verbleibt, der einen Freihub h_{F} des Magnetankers 5 definiert.

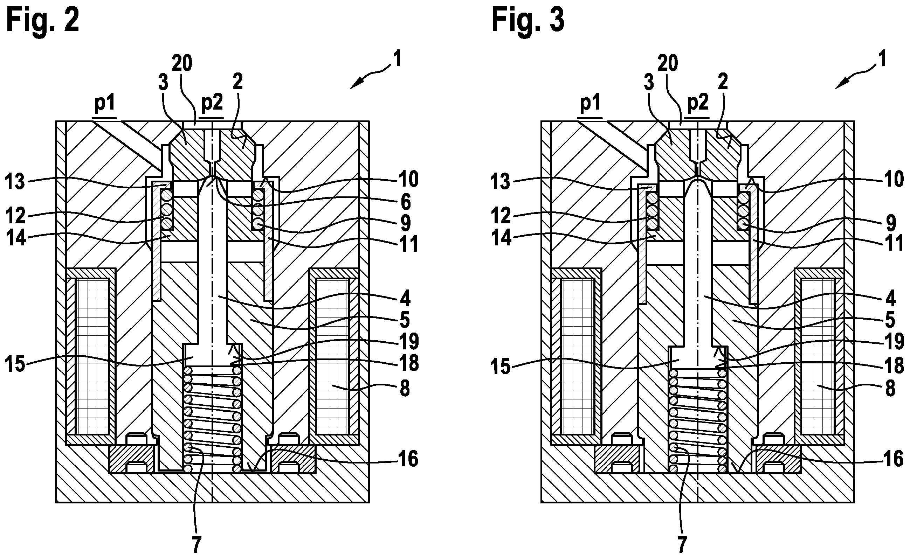

Die Funktionsweise des Absperrventils 1 wird nachfolgend anhand der Figuren 2 bis 5 erläutert.

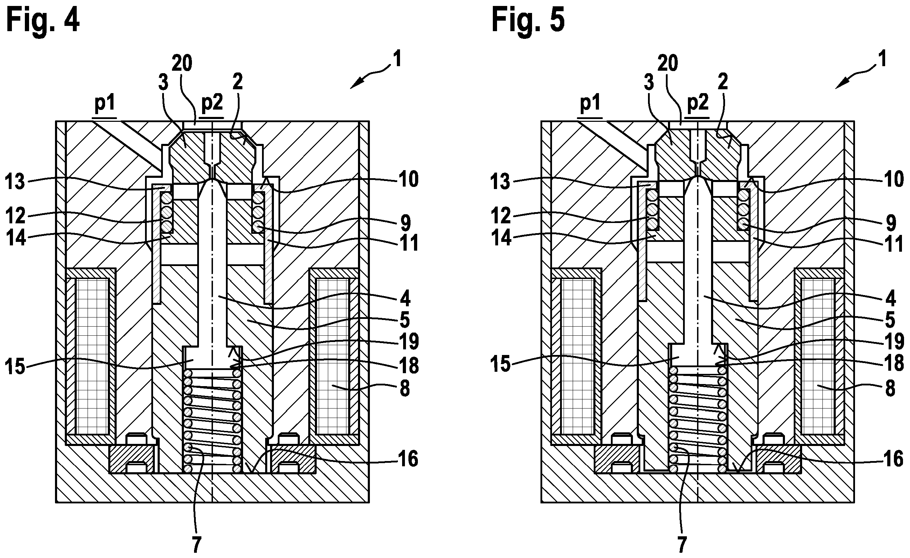

Wird zum Öffnen des Absperrventils 1 die Magnetspule 8 bestromt, bildet sich ein Magnetfeld aus, dessen Magnetkraft den Magnetanker 5 in Richtung eines Hubanschlags 16 zieht. Der Magnetanker 5 löst sich somit vom gehäuseseitigen Anschlag 10 und bewegt sich in Richtung des Hubanschlags 16. Erst mit Durchlaufen des Freihubs h_{F} schlägt der Magnetanker 5 am Ventilstößel 4 an (siehe Figur 2), wodurch der Magnetanker 5 einen Öffnungsimpuls auf den Ventilstößel 4 überträgt, so dass dieser aus dem Steuerventilsitz 6 gerissen wird und das Steuerventil öffnet (siehe Figur 3). Zugleich wird der Magnetanker 5 durch die Impulsübergabe abgebremst, so dass die Gefahr des Prellens am Hubanschlag 16 gemindert ist. Ein weiterer Bremseffekt wird dadurch erzielt, dass mit zunehmendem Hub des Magnetankers 5 die Druckfeder 9 gespannt wird. Das Spannen der Druckfeder 9 bewirkt ferner eine öffnende Kraft am Hauptventilglied 3, so dass dieses öffnet, sobald die öffnenden Federkräfte größer als die schließenden pneumatischen Kräfte am Hauptventilglied sind. Durch das bereits geöffnete Steuerventil stellen sich am Hauptventil geänderte pneumatische Druckverhältnisse ein, die zu einer immer weiter absinkenden pneumatischen Schließkraft führen. Denn bei geöffnetem Steuerventil strömt Brenngas aus dem Druckgasbehälter, in dem ein Druck p1 herrscht, in einen Auslass 20, in dem ein Druck p2 herrscht, der kleiner als p1 ist. Über das geöffnete Steuerventil erfolgt jedoch ein zunehmender Druckausgleich. In der Folge öffnet das Hauptventil, sobald die abnehmende pneumatische Schließkraft aufgrund der Druckdifferenz am Hauptventilglied geringer als die öffnende Federkraft der gespannten Druckfeder 9 ist (siehe Figur 4). Über eine geeignete Auslegung der öffnenden Federkraft kann die sogenannte Öffnungsdruckdifferenz am Hauptventilglied genau bestimmt werden, da sich diese Öffnungsdruckdifferenz direkt aus dem Quotienten aus Federkraft und Fläche des effektiven Hauptventilsitzdurchmessers ergibt. Hierdurch kann der Druckstoß beim Öffnen des Hauptventilglieds nahezu unabhängig vom Tankdruck auf ein gut ertragbares Maß begrenzt werden, was die Bauteilbelastung der nachfolgenden Bauteile, insbesondere des Druckminderers, erheblich verringert.

Zum Schließen des Absperrventils 1 wird die Bestromung der Magnetspule 8 beendet, so dass die Schließfeder 7 den Ventilstößel 4 in den Steuerventilsitz 6 zurückstellt. Da dieser im Hauptventilglied 3 ausgebildet ist, stellt der Ventilstößel 4 zugleich das Hauptventilglied 3 in den Hauptventilsitz 2 zurück (siehe Figur 5). Aufgrund der Kopplung des Ventilstößels 4 mit dem Magnetanker 5 wird auch dieser in Richtung des gehäuseseitigen Anschlags 10 mitgeführt. Die vollständige Rückstellung des Magnetankers 5 in seine Ausgangslage (siehe Figur 1) wird jedoch mit Hilfe der Druckfeder 9 bewirkt. Durch die Druckfeder 9 ist somit sichergestellt, dass die Ausgangsposition des Magnetankers 5 beim Öffnen immer gleich ist, so dass der Magnetanker 5 den Freihub h_{F} durchläuft, um den gewünschten Öffnungsimpuls auf den Ventilstößel 4 zu überträgt. Der Öffnungsimpuls ermöglicht eine kleinere Dimensionierung der Magnetspule 8, da das Öffnen mit reduzierter Magnetkraft bewirkt werden kann.

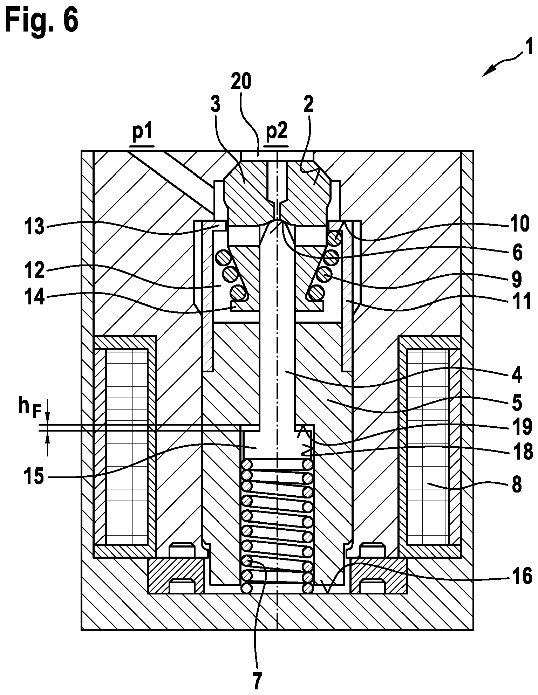

Eine weitere bevorzugte Ausführungsform eines erfindungsgemäßen Absperrventils 1 ist in der Figur 6 dargestellt. Im Unterschied zum Absperrventil 1 der Figuren 1 bis 5 ist bei diesem Absperrventil 1 eine andere Druckfeder 9 eingesetzt. Diese ist ebenfalls als Schraubendruckfeder mit Drahtwindungen 17 ausgeführt, die Drahtwindungen 17 weisen jedoch variierende Windungsdurchmesser auf, so dass die Druckfeder 9 eine progressive Federkennlinie aufweist. Die progressive Federkennlinie ermöglicht eine noch bessere Anpassung der Ventilkraftkennlinie an die Magnetkraftkennlinie, so dass die Magnetspule 8 weiter verkleinert werden kann.

Die Funktionsweise sind des Absperrventils 1 der Figur 6 entspricht der des Absperrventils 1 der Figuren 1 bis 5, so dass auf die vorstehende Beschreibung verwiesen wird.

## Patentansprüche

1. Absperrventil (1) für einen Druckgasbehälter, umfassend
- ein Hauptventil mit einem Hauptventilsitz (2) und einem hubbeweglichen Hauptventilglied (3),
- ein Steuerventil zum Steuern der Hubbewegung des Hauptventilglieds (3), wobei das Steuerventil einen hubbeweglichen Ventilstößel (4) aufweist, der mit einem hubbeweglichen Magnetanker (5) koppelbar und in Richtung eines Steuerventilsitzes (6), der im Hauptventilglied (3) ausgebildet ist, von der Federkraft einer Schließfeder (7) beaufschlagt ist, sowie
- eine Magnetspule (8) zum Einwirken auf den Magnetanker (5),
**dadurch gekennzeichnet, dass** bei unbestromter Magnetspule (8) der Magnetanker (5) vom Ventilstößel (4) entkoppelt und über die Federkraft einer Druckfeder (9) gegen einen gehäuseseitigen Anschlag (10) vorgespannt ist, wobei die Druckfeder (9) einerseits am Magnetanker (5), andererseits am Hauptventilglied (3) abgestützt ist.

2. Absperrventil (1) nach Anspruch 1,
**dadurch gekennzeichnet, dass** der Magnetanker (5) einen vorzugsweise hohlzylinderförmigen Abschnitt (11) aufweist, der das Hauptventilglied (3) unter Ausbildung eines Ringraums (12) abschnittsweise umgibt, wobei im Ringraum (12) die Druckfeder (9) aufgenommen ist.

3. Absperrventil (1) nach Anspruch 2,
**dadurch gekennzeichnet, dass** die Druckfeder (9) einerseits an einem sich nach radial innen erstreckenden Ringbund (13) des vorzugsweise hohlzylinderförmigen Abschnitts (11), andererseits an einem sich nach radial außen erstreckenden Ringbund (14) des Hauptventilglieds (3) abgestützt ist.

4. Absperrventil (1) nach Anspruch 3,
**dadurch gekennzeichnet, dass** der Ringbund (13) und/oder der Ringbund (14) einen in Umfangsrichtung geschlossenen oder mehrfach unterbrochen, insbesondere segmentartigen, Ring ausbildet bzw. ausbilden.

5. Absperrventil (1) nach einem der vorhergehenden Ansprüche,
**dadurch gekennzeichnet, dass** der Ventilstößel (4) zumindest abschnittsweise im Magnetanker (5) aufgenommen ist und einen im Magnetanker (5) aufgenommenen, sich nach radial außen erstreckenden Ringbund (15) zur Kopplung mit dem Magnetanker (5) aufweist.

6. Absperrventil (1) nach einem der vorhergehenden Ansprüche,
**dadurch gekennzeichnet, dass** der Hub des Magnetankers (5) größer als der Hub des Ventilstößels (4) ist, wobei der Hub des Magnetankers (5) einerseits durch den gehäuseseitigen Anschlag (10), andererseits durch einen Hubanschlag (16) begrenzt wird.

7. Absperrventil (1) nach einem der vorhergehenden Ansprüche,
**dadurch gekennzeichnet, dass** die Druckfeder (9) eine lineare oder progressive Federkennlinie aufweist.

8. Absperrventil (1) einem der vorhergehenden Ansprüche,
**dadurch gekennzeichnet, dass** die Druckfeder (9) eine Schraubendruckfeder ist, deren Drahtwindungen (17)
- variierende Drahtdicken
- variierende Windungsdurchmesser und/oder
- variierende Steigungshöhen
aufweisen.

9. Druckgasbehälter mit einem Absperrventil (1) nach einem der vorhergehenden Ansprüche.

## Claims

1. Shut-off valve (1) for a pressurized-gas vessel, comprising
- a main valve having a main valve seat (2) and a main valve member (3) which can perform stroke movements,
- a control valve for controlling the stroke movement of the main valve member (3), the control valve having a valve tappet (4) which can perform stroke movements, can be coupled to a magnet armature (5), which can perform stroke movements, and is subjected to the spring force of a closing spring (7) in the direction of a control valve seat (6), which is formed in the main valve member (3), and
- a solenoid (8) for acting upon the magnet armature (5),
**characterized in that**, when the solenoid (8) is not energized, the magnet armature (5) decouples from the valve tappet (4) and is preloaded against a housing-side stop (10) via the spring force of a compression spring (9), the compression spring (9) being supported at one end on the magnet armature (5) and at the other end on the main valve member (3).

2. Shut-off valve (1) according to Claim 1,
**characterized in that** the magnet armature (5) has a preferably hollow-cylindrical portion (11) which partially surrounds the main valve member (3), forming an annular chamber (12), the compression spring (9) being accommodated in the annular chamber (12).

3. Shut-off valve (1) according to Claim 2,
**characterized in that** the compression spring (9) is supported at one end on a radially inwardly extending annular collar (13) of the preferably hollow-cylindrical portion (11) and at the other end on a radially outwardly extending annular collar (14) of the main valve member (3).

4. Shut-off valve (1) according to Claim 3,
**characterized in that** the annular collar (13) and/or the annular collar (14) forms or form an in particular segmented ring which is closed in the circumferential direction or is multiply interrupted.

5. Shut-off valve (1) according to one of the preceding claims,
**characterized in that** the valve tappet (4) is at least partially accommodated in the magnet armature (5) and has an annular collar (15), which is accommodated in the magnet armature (5) and extends radially outwards, for coupling to the magnet armature (5).

6. Shut-off valve (1) according to one of the preceding claims,
**characterized in that** the stroke of the magnet armature (5) is greater than the stroke of the valve tappet (4), the stroke of the magnet armature (5) being restricted at one end by the housing-side stop (10) and at the other end by a stroke stop (16).

7. Shut-off valve (1) according to one of the preceding claims,
**characterized in that** the compression spring (9) has a linear or progressive spring characteristic curve.

8. Shut-off valve (1) according to one of the preceding claims,
**characterized in that** the compression spring (9) is a helical compression spring, the wire windings (17) of which have
- varying wire thicknesses
- varying winding diameters and/or
- varying pitch heights.

9. Pressurized-gas vessel having a shut-off valve (1) according to one of the preceding claims.

## Revendications

1. Soupape d'arrêt (1) pour un récipient de gaz sous pression, comprenant
- une soupape principale comportant un siège de soupape principale (2) et un élément de soupape principale (3) mobile en translation,
- une soupape de commande destinée à commander le mouvement de translation de l'élément de soupape principale (3), la soupape de commande comportant une tige de soupape (4) mobile en translation, qui peut être couplée à un induit magnétique (5) mobile en translation et qui est sollicitée en direction d'un siège de soupape de commande (6), formé dans l'élément de soupape principale (3), par la force de ressort d'un ressort de fermeture (7), ainsi que
- une bobine magnétique (8) destinée à agir sur l'induit magnétique (5),
**caractérisée en ce que**, lorsque la bobine magnétique (8) n'est pas alimentée en courant, l'induit magnétique (5) est découplé de la tige de soupape (4) et est précontraint contre une butée (10) du côté du boîtier par la force de ressort d'un ressort de compression (9), le ressort de compression (9) étant appuyé d'une part sur l'induit magnétique (5) et d'autre part sur l'élément de soupape principale (3).

2. Soupape d'arrêt (1) selon la revendication 1,
**caractérisée en ce que** l'induit magnétique (5) comporte une section (11) de préférence cylindrique creuse, qui entoure partiellement l'élément de soupape principale (3) en formant un espace annulaire (12), le ressort de compression (9) étant logé dans l'espace annulaire (12).

3. Soupape d'arrêt (1) selon la revendication 2,
**caractérisée en ce que** le ressort de compression (9) est appuyé d'une part sur une collerette annulaire (13) s'étendant radialement vers l'intérieur de la section (11) de préférence cylindrique creuse, et d'autre part sur une collerette annulaire (14) s'étendant radialement vers l'extérieur de l'élément de soupape principale (3).

4. Soupape d'arrêt (1) selon la revendication 3,
**caractérisée en ce que** la collerette annulaire (13) et/ou la collerette annulaire (14) forme ou forment un anneau fermé dans la direction circonférentielle ou un anneau interrompu à plusieurs reprises, notamment de type segmenté.

5. Soupape d'arrêt (1) selon l'une des revendications précédentes,
**caractérisée en ce que** la tige de soupape (4) est logée au moins partiellement dans l'induit magnétique (5) et comporte une collerette annulaire (15), s'étendant radialement vers l'extérieur et logée dans l'induit magnétique (5), destinée au couplage avec l'induit magnétique (5).

6. Soupape d'arrêt (1) selon l'une des revendications précédentes,
**caractérisée en ce que** la course de l'induit magnétique (5) est supérieure à la course de la tige de soupape (4), la course de l'induit magnétique (5) étant limitée d'une part par la butée (10) du côté du boîtier et d'autre part par une butée de course (16).

7. Soupape d'arrêt (1) selon l'une des revendications précédentes,
**caractérisée en ce que** le ressort de compression (9) présente une caractéristique de ressort linéaire ou progressive.

8. Soupape d'arrêt (1) selon l'une des revendications précédentes,
**caractérisée en ce que** le ressort de compression (9) est un ressort de compression hélicoïdal dont les spires de fil (17) présentent
- des épaisseurs de fil variables,
- des diamètres de spire variables et/ou
- des pas variables.

9. Récipient de gaz sous pression comportant une soupape d'arrêt (1) selon l'une quelconque des revendications précédentes.
